(19) **Europäisches Patentamt / European Patent Office / Office européen des brevets**

(11) **EP 3 335 507 B1**

(12) **EUROPEAN PATENT SPECIFICATION**

(45) Date of publication and mention
of the grant of the patent:
**11.11.2020   Bulletin 2020/46**

(51) Int Cl.:
**H04W 74/08** (2009.01)       **H04B 7/26** (2006.01)

(21) Application number: **15763298.5**

(86) International application number:
**PCT/EP2015/070756**

(22) Date of filing: **10.09.2015**

(87) International publication number:
**WO 2017/041847 (16.03.2017 Gazette 2017/11)**

(54) **CLIENT AND ACCESS POINT COMMUNICATION DEVICES AND METHODS FOR RANDOM ACCESS COMMUNICATION**

CLIENT UND ZUGANGSPUNKTKOMMUNIKATIONSVORRICHTUNGEN UND VERFAHREN ZUR DIREKTZUGRIFFSKOMMUNIKATION

CLIENT ET DISPOSITIFS ET PROCÉDÉS DE COMMUNICATION DE POINT D'ACCÈS POUR UNE COMMUNICATION PAR ACCÈS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**20.06.2018   Bulletin 2018/25**

(73) Proprietor: **Huawei Technologies Co., Ltd.
Longgang District
Shenzhen, Guangdong 518129 (CN)**

(72) Inventors:
• **TSODIK, Genadiy**
  **80992 Munich (DE)**
• **SHILO, Shimi**
  **80992 Munich (DE)**
• **EZRI, Doron**
  **80992 Munich (DE)**
• **REDLICH, Oded**
  **80992 Munich (DE)**
• **HAN, Xiao**
  **80992 Munich (DE)**

(74) Representative: **Pfenning, Meinig & Partner mbB
Patent- und Rechtsanwälte
Joachimsthaler Straße 10-12
10719 Berlin (DE)**

(56) References cited:
**WO-A2-2006/020520      US-A1- 2013 229 988**

## Description

TECHNICAL FIELD

The invention relates to a client type communication device, an access point type communication device and according communication methods. Especially, it relates to random access communication.

BACKGROUND

Random access (RA) is a procedure that allows client type communication devices to request from an access point (AP) type communication device resources for transmission by use of a resource request, as well as initiate an association procedure with the AP. In other words, this mechanism is usually applied by the associated client type communication devices that need to request the resources and also by the new non-associated client type communication devices for the first time to achieve an association with a specific AP.

The number of client type communication devices, which include more and more special devices, like Internet of Things (IoT) clients, grows and is expected to reach very high numbers. Thus an effective RA mechanism which can manage a large number of clients within a very short time, hence effectively without large overhead, is crucial for future generations of communication systems, especially for future generations of the 802.11 protocol.

Currently, in the 802.11ax standard, RA is applied immediately after a trigger frame (TF-R), which is transmitted by the AP. Thus the client type communication devices wait for AP to trigger them (indicate the existence of a random access opportunity). A TF-R frame may be followed by several RA opportunities - within each opportunity, clients can try to access the channel. For doing so they contend with each other. Two main trends are mentioned here, as examples:

MAC based RA:

In this technique, the RA is transmitted as regular data, including payload, where each client allocates its transmission within a single resource unit (RU) as defined in 802.1 1ax. A RU is defined as a set of continuous subcarriers, e.g. 26, over some period of time. The AP can decide to provide more than one RA frame triggered by a single TF-R. The specific frame and the RU within the frame can be chosen in a random way by each client type communication device. No distinguishing between the non-associated client type communication devices and associated client type communication devices is introduced and all the client type communication devices that try to transmit an RA, are allowed to choose any time/frequency resources allocated for the current RA opportunity.

The main disadvantage of the MAC based RA is a very low number of RA resources available within a single frame. E.g. in a 20MHz bandwidth, there are 9 RUs available. When the number of client type communication devices is high, the probability of two or more clients choosing the same time and frequency resources to transmit their RA data is very high. This leads to a large number of collisions which requires RA retransmissions. As a result, the total time required to complete the RA procedure for all the client type communication devices, which try to transmit, can be extremely long. Moreover, the new, not yet associated client type communication devices, which are trying to access the network, interfere with the already associated client type communication devices. This leads to a further reduction in system efficiency. It is important to note that the AP has no idea how many non-associated client type communication devices there are and which of these will try to associate with it. Since these numbers may be large they may significantly increase the collision probability.

PHY based RA:

PHY based RA is transmitted as PHY signaling and does not include any higher layer (MAC or above) payload. Several possibilities regarding PHY based RA, where the RA data is a simple PHY signaling that informs the AP that a specific client type communication device wants resources, are imaginable. The RA data is thus very short and allows a higher number of client type communication devices to be allocated within a single RA frame. However, additional management transmissions are required in this approach to complete the resource request (or association) procedure, since the AP doesn't necessarily know how many resources the client type communication device requires, etc.

PHY based RA tries to solve the main problem of the MAC based mechanism and enlarge the number of the client type communication devices that can transmit simultaneously and reduce the number of collisions. However, exemplary suggestions are limited in terms of number of client type communication devices they support. This number is not sufficient for the expected huge amount of client type communication devices in future networks.

The document of WO 2006/020520 A2 discloses a method and system for controlling access to a medium in a wireless communication system. It is disclose that "The AP announces the RMCA parameters in the EB. These parameters include information about the MSRAs such as location, duration, and access mechanism and optionally type. The type could differentiate between MSRAs used for associated and un-associated STAs" in Par. 78 in the document.

SUMMARY

The reader is referred to the appended independent claims. Some preferred features are laid out in the dependent claims.

Accordingly, an object of the present invention is to provide a client type communication device, an access point type communication device, and according methods, which allow for a great number of client type communication devices in the communication system and at the same time guarantee a high communication efficiency.

The object is solved by the features of claim 1 for the client type communication device, by the features of claim 7 for the access point type communication device, by the features of claims 16 and 17 for the according methods and by the features of claim 18 for the associated computer program. The dependent claims contain further developments.

The scheme presented here introduces a RA mechanism which allows both associated and non-associated client type communication devices to transmit a random access communication within the same frame with zero collisions between associated and non-associated client type communication devices. The special design of RA parameters provides a very efficient transmission scheme for a very large number of client type communication devices, which can be successfully detected by an access point communication device within a very short time period.

The main idea of the present invention is to separate random access communication of client type communication devices, which have already formed an association with an access point type communication device, and are therefore in an associated mode with regard to the access point type communication device and client type communication devices, which have not yet formed an association with the access point type communication device and are therefore in a non-associated mode with regard to the access point type communication device.

This differentiation is done by defining different communication resources for the two types of random access communications. First communication resources are used for random access communication by already associated client type communication devices and second communication resources are used for random access communications by client type communication devices, which are not yet associated.

Collisions between random access communications of these two different types of client type communication device are therefore completely prevented.

In order to most efficiently assign the communication resources, especially in order to most efficiently divide available communication resources between the first communication resources and the seconds communication resources, the access point type communication device can decide this allocation and broadcast it to the respective client type communication devices as a communication resources setting message.

The communication resources setting message advantageously is a broadcast message sent on specific communication resource(s) known to the client type communication devices. The client type communication devices are then configured to read this/these communication resource(s), to receive the communication resources setting message, and to learn its content. E.g. this is done before the client type communication device initiates random access communication or regular intervals (e.g. within a TF-R message).

Moreover, in order to keep the individual random access communication as short as possible, the random access message sent by the client type communication device advantageously only comprises information regarding the identity of the respective originating client type communication device. A part of the identity can also be coded into the specific communication resource(s) used for transmitting the random access communication.

Rules for determining how the client type communication devices are to construct the random access communications and on which communication resource(s) they should be transmitted on, can also be provided by the access point type communication device. This leads to a high flexibility of the communications.

When receiving a random access communication, the access point communication device is than able to just from the information within the random access communication, especially from the communication resource(s) used, determine, if the originating client type communication device is already associated or if it is non-associated, and advantageously also determine the identity of the client type communication device, if it is already associated.

Generally, it has to be noted that all arrangements, devices, elements, units and means and so forth described in the present application could be implemented by software or hardware elements or any kind of combination thereof. Furthermore, the devices may be processors or may comprise processors, wherein the functions of the elements, units and means described in the present applications may be implemented in one or more processors. All steps which are performed by the various entities described in the present application as well as the functionality described to be performed by the various entities are intended to mean that the respective entity is adapted to or configured to perform the respective steps and functionalities. Even if in the following description or specific embodiments, a specific functionality or step to be performed by a general entity is not reflected in the description of a specific detailed element of that entity which performs that specific step or functionality, it should be clear for a skilled person that these methods and functionalities can be implemented in respect of software or hardware elements, or any kind of combination thereof.

BRIEF DESCRIPTION OF DRAWINGS

The present invention is in the following explained in detail in relation to embodiments of the invention in reference to the enclosed drawings, in which

Fig. 1 shows an embodiment of the communication system including an embodiment of the client type communication device and an embodiment of the access point type communication device;

Fig. 2 shows an exemplary set of communication resources;

Fig. 3 shows an exemplary random access block;

Fig. 4 shows an exemplary division of an identification number;

Fig. 5 shows an exemplary set of communication resources when using frequency diversity;

Fig. 6 shows an exemplary set of communication resources when using mapping randomization;

Fig. 7 shows a first embodiment of the method for performing random access,

Fig. 8 shows a second embodiment of the method for performing random access, and

Fig. 9 shows an exemplary diagram of timing result gains by use of the embodiments of the invention.

DESCRIPTION OF EMBODIMENTS

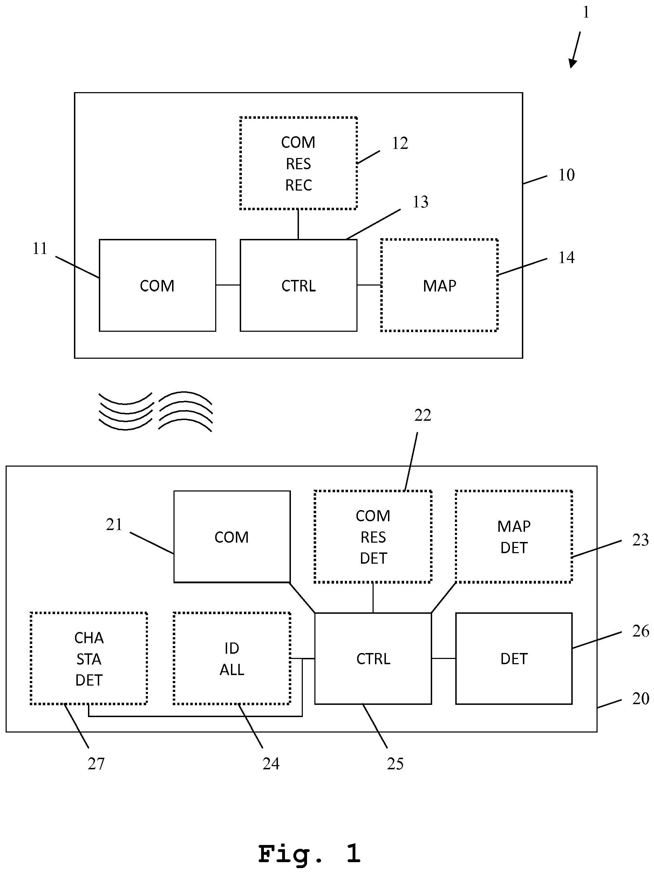

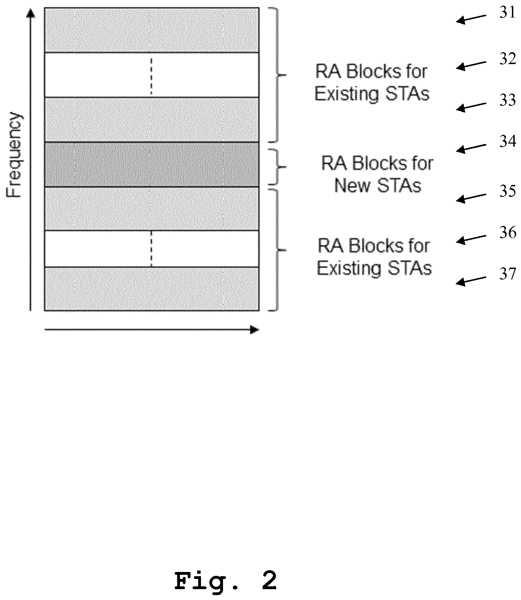

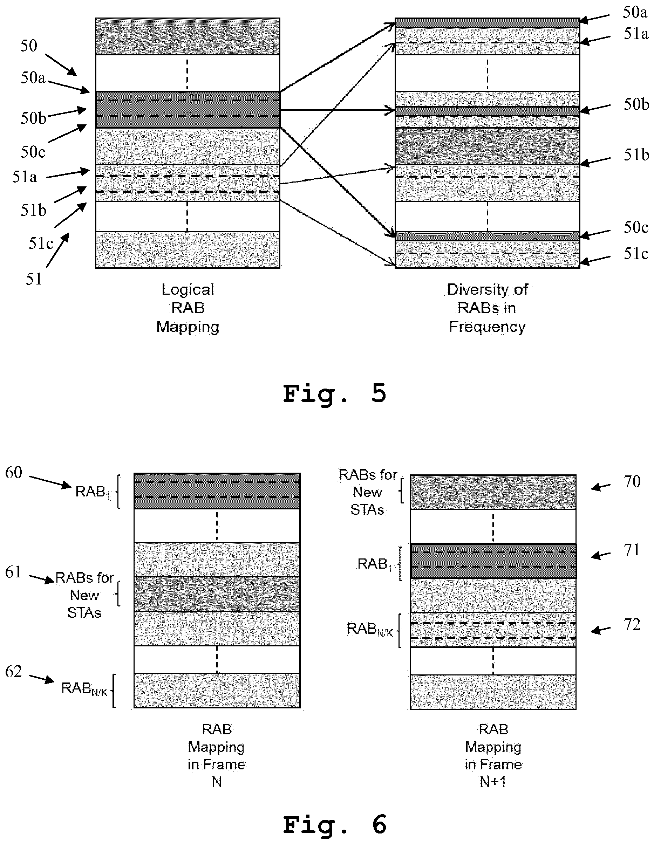

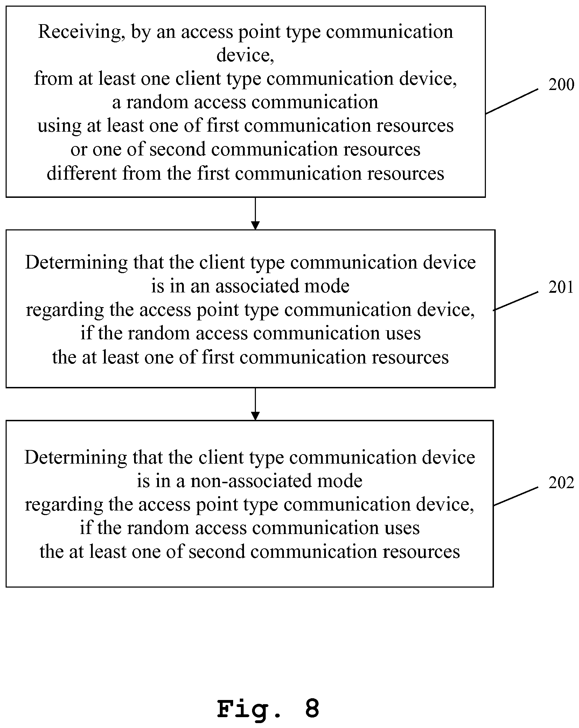

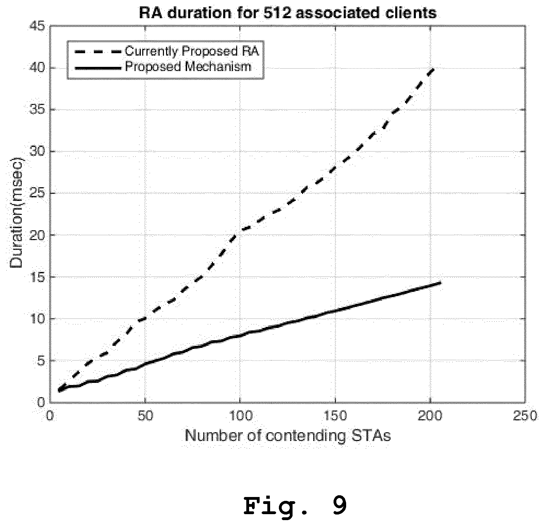

First we demonstrate the construction and function of an embodiment of the communication system. Especially, the construction and function of embodiments of a client type communication device and access point type communication device are shown in Fig. 1. Secondly, along Fig. 2-4 further details of the implementation are described. Along Fig 5 and Fig. 8, the function of embodiments of the communication methods are shown. Finally, with reference to Fig. 9, benefits of the embodiments of the invention are described. Similar entities and reference numbers and different figures have been partially omitted.

In Fig. 1, an embodiment of the communication system 1 (preferably for a wireless local area network) is shown. The communication system 1 comprises at least one client type communication device 10 (preferably for a wireless local area network) and one access point type communication device 20 (preferably for a wireless local area network).

The client type communication device 10 comprises a communication unit 11 and a control unit 13. Moreover optionally, it additionally comprises a communication resources receiving unit 12 and a mapping unit 14. The communication unit 11, the communication resources receiving unit 12, and the mapping unit 14 are each connected to the control unit 13. The control unit 13 is adapted to control all other units 11, 12 and 14.

When performing a random access communication to the access point type communication device 20, the communication unit 11 uses one of first communication resources, if the client type communication device 10 is in an associated mode regarding the access point type communication device 20 and uses one of second communication resources, if the client type communication device 10 is in a non-associated mode regarding the access point type communication device 20. The first communication resources and the second communication resources are non-identical. It is thereby assured, that no collisions can occur between messages of client type communication devices 10, which are in an associated mode and client type communication devices 10 which are in a non-associated mode.

The first and second communication resources, each are random access blocks. These random access blocks comprise non-contiguous frequency sections. The use of non-contiguous frequency sections allows for frequency diversity and alleviates drawbacks from suboptimal transmission conditions on a part of the available spectrum.

A random access block typically comprises a plurality of frequency subcarriers and a plurality of time slots. A frequency section comprises at least one such frequency subcarrier but typically a plurality of neighboring (the spacing between two neighboring frequency subcarriers depends on what is defined by the underlying communication system) frequency subcarriers.

Contiguous frequency sections therefore comprises a plurality of neighboring frequency subcarriers, with no frequency subcarriers in-between.

A random access block comprising non-contiguous frequency sections therefore comprises a plurality of frequency subcarriers wherein between at least some of them further frequency subcarriers are existent which do not belong to this random access block. Hence, such random access block can be understood to be spread over frequency.

Moreover, since the random access communication is indeed spread over a number of frequencies, channel properties can be used for determining a transmission channel state of the communication channel between the client type communication device and the access point type communication device. This information later on can be used for link adaptation. Especially, it can be used for deciding, which frequencies (or frequency subcarriers) are most suitable for achieving a high throughput.

Also time diversity might be applied to deal with burst errors due to occasional noise on the transmission channel. Therefore, the random access blocks of the first and second communication resources comprise non-contiguous time sections.

The communication resources receiving unit 12 is adapted to receive from the access point type communication device 20, a communication resources setting message, which defines the first and second communication resources. The first and second communication resources defined by this message are then used by the communication unit 11.

If the client type communication device 10 is in the associated mode with regard to the access point type communication device 20, the mapping unit 14 advantageously determines at least a part of the random access communication (such as a random access sequence to be used) and the first communication resources used for performing the random access communication based on an identification number of the client type communication device 10 according to a mapping rule.

As an example, the mapping unit 14 can be configured to determine the random access sequence based on a first part of an identification number of the client type communication device 10 according to the mapping rule. Moreover, it can be configured to select the at least one of the first communication resources used for performing the random access communication, based on a second part of the identification number, according to the mapping rule. In another example the second part of the identification can be used to determine the random access sequence and the first part is used to determine the at least one of the first communication resources.

The mapping rule as well as the identification number can advantageously be received from the access point type communication device 20. The identification number is in this case received in an identification number allocation massage. The mapping rule is in this case received in a mapping rule allocation message.

In order to keep the random access communication short, the random access communication message from the client type communication device to the access point type communication type advantageously only comprises the information necessary for uniquely identifying the client type communication device or for announcing a resource request of the client type communication device 10. Additional information is provided from the client type communication device 10 only after the access point type communication device 20 has requested it.

The access point type communication device 20 comprises a communication unit 21, a control unit 25, and a determining unit 26. Optionally, it additionally comprises an identification number allocation unit 24, a communication resources determining unit 22, a mapping determining unit 23, and a channel state determining unit 27. The control unit 25 is connected to all the remaining units 21, 22, 23, 24, 26 and 27, and adapted to control them.

The communication unit 21 receives from the at least one client type communication device 10 a random access communication using at least one of first communication resources or one of second resources different from the first communication resources. The determining unit 26 determines from the use of the first or second communication resources, if the client type communication device 10 is in an associated mode regarding the access point type communication device 20 or in a non-associated mode regarding the access point type communication device 20. Advantageously, it can additionally determine therefrom, the identity of the client type communication device 10, if it is in the associated mode.

If the client type communication device 10 is in non-associated mode the client type communication device 10 is configured to randomly choose the random access sequence and the at least one of the second communication resources (i.e. a Random access block for the non-associated state). The access point type communication device 20 is configured to initiate the association procedure with this specific non-associated client type communication device 10 based on the chosen sequence and resource(s) used for the random access communication.

The communication resources determining unit 12 determines the first and second communication resources. Especially, it does this based upon a number of client type communication devices associated to the access point type communication device 20 and/or a frequency of receiving random access communications from client type communication devices not associated to the access point communication device 20 and/or a number of detected random access communication collisions. The communication unit 21 transmits (e.g. broadcasts) the communication resources setting message, which defines the first and second communication resources to the client type communication devices 10.

Especially, the number of resources and the size of resources allocated to already associated devices and not yet associated devices can be based upon the number of available resources and/or the number of already associated devices. In case of a low number of associated devices, a large portion of the available resources (e.g. random access blocks, each comprising a certain number time slots and frequency subcarriers) can be allocated to non-associated devices, while when the number of associated devices is high, a higher portion of the available resources should be allocated to the already associated devices.

The identification number allocation unit 24 allocates an identification number to each client type communication device 10, which establishes an association with the access point type communication device 20. This identification number is then transmitted to the client type communication device 10 by use of the communication unit 21 as an identification number allocation message.

The mapping rule determination unit 23 determines a mapping rule, which defines, how a client type communication device 10 associated to the access point type communication device 20 has to determine from (e.g. a first or second part of) the identification number, a part of the random access communication (such as the random access sequence) and from (e.g. from a second or first part of) the identification number, the at least one of first communication resources to be used for performing the random access communication. The mapping rule is transmitted to the client type communication device(s) 10 by the communication unit 21 as a mapping rule allocation message. Also this mapping rule allocation message can be broadcasted by the access point type communication device 20.

In order to randomize the frequencies allocated to a specific client type communication device 10, the mapping rule can be changed at regular or in regular intervals. This is useful for mitigating frequency specific drops in transmission conditions (in other words benefiting from frequency diversity).

The channel state determining unit 27 determines

channel properties on at least two specific non-contiguous frequency sections (each comprising at least one frequency subcarrier) from the random access communication received by the communication unit 21. It then determines a transmission channel state from the channel properties on the at least two specific non-contiguous frequency sections. The communication unit 21 allocates resources for an uplink and/or downlink payload data transmission to the client type communication device 10, based upon the transmission channel state determined by the channel state determining unit 27. Thereby, the payload transmission can be optimized to channel conditions.

In Fig. 2, a number of communication resources 31-37 are shown. The communication resources 31-37 are time- and frequency-sections of the available spectrum. The communication resources 31, 32, 33, 35, 36 and 37 are dedicated to client type communication devices, which are in an associated mode with regard to the access point type communication device. At the same time communication resource 34 is dedicated to client type communication devices, which are in a non-associated mode with regard to the access point type communication device. A random access block (RAB) is defined as a basic random access communication resource.

In order to allow for a flexibility to adjust the RA frame to a total number of available client type communication devices, the whole bandwidth can be divided into $N/K$ RABs (Random access blocks), where $N$ is a total number of elements, for example (frequency) subcarriers, and $K$ is a size of a single RAB, in units of elements/subcarriers. The exact parameters can be chosen by the access point type communication device according to the requirements of the communication system or network and be transmitted to the informed to the client type communication devices within the TF-R. Especially this information can be generated by the communication resources determining unit 22 of the access point type communication device 20 and can be transmitted in the communication resource allocation message.

In order to support a large number of client type communication devices, a narrow RAB should be chosen. For example, assuming the numerology of the 802.11ax standard, if $K = 3$ the number of RABs is

$$N/_K = \frac{234}{3} = 78.$$

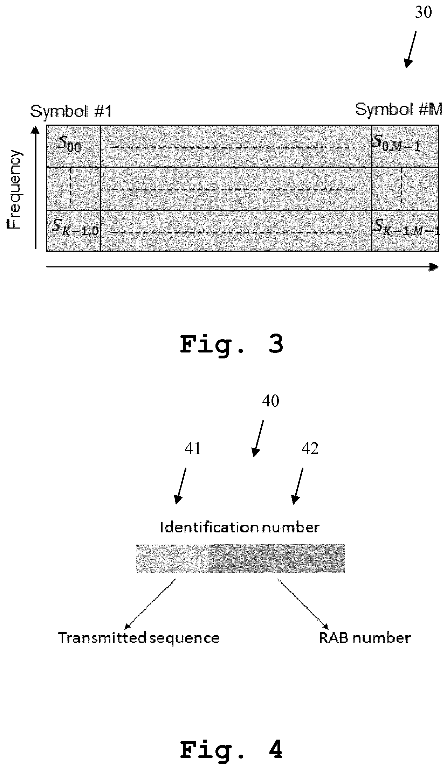

The duration in time combined with the structure in frequency defines the maximum number of the client type communication devices, which can be detected with no collision within a single RAB. If a number of OFDM symbols that is allocated for the RA frame is $M$ as shown on Fig. 3, the total number of RA communication resources within a single RAB is $MK$. This number is a maximum number of RA transmissions that can be detected simultaneously, for example, every client type communication device transmits on a single RA resource only.

The access point type communication device can decide, based on the network conditions which size of RAB is most suitable for current system requirements, how many RABs should be dedicated for the associated clients and what is the required time duration of the RA frame.

Since the transmission conditions on different frequencies greatly vary, it is useful to vary the communication resources allocated to different client type communication devices, and also to vary the communication resources allocated to associated and non-associated client type communication devices.

Also, for mitigating this problem, the communication resources is chosen in non-contiguous manner. That is, the communication resources can be chosen so that frequency sections are used, which do not lie beside each other in the spectrum. This means that the $K$ RA resources can be spread in frequency and should not be allocated in an adjacent manner. For example, if $K = 3$ we can define that the resource elements (e.g. frequency subcarriers) that are marked for the 1st RAB are 1, 75 and 149; the resource elements that are marked for the 2nd RAB are 2, 76 and 150 and so on.

In order to reduce the length of a random access communication of a client type communication device to an access point type communication device to a minimal length, and in order to ensure a collision free transmission for the associated client type communication devices, it is proposed that the allocation of an RAB for the specific client type communication device and the RA communication that should be transmitted within each RAB are to be based on a one-to-one mapping originating in an identification number of the client type communication device. This is shown in Fig. 4. An identification number 40 has a first part 41 and a second part 42. The first part 41 is used for determining the content (e.g. a sequence) of the random access communication. This is done according to a mapping rule which is either preset or provided to the client type communication device 10, by the mapping determining unit 23 and the communication unit 21 of the access point type communication device 20.

Especially, each client type communication device transmits a sequence which is defined by the first part 41 of its Identification number 40. All sequences used within any one of the RAB are orthogonal to each other. The sequences though can be reused in different RABs. For example, each client type communication device may transmit a Walsh-Hadamard code as part of the random access communication. Within each RAB, several respective codes can be transmitted, and each client type communication device's code is pre-defined according to its Identification number 40 so both client type communication device and access point type communication device know which code will be chosen.

As already pointed out earlier, the mapping rule determines how the part of the random access communication is determined from the first part 41 of the identification number 40 can be dynamically assigned.

Moreover, information can also be transmitted by the client type communication device 10 by selecting the specific communication resource used for transmitting the random access communication. The RAB number (which resource out of the first communication resources is to be used for the random access communication) can be determined based upon the second part 42 of the identification number by use of the mapping rule, mentioned earlier.

For example, the RAB number can be calculated from the second part 42 of the Identification number 40 of a client type communication device using a modulo of a number of RABs dedicated for the associated client type communication devices. For example, in case of 74 RABs, client type communication devices with identification numbers 1 and 75 should transmit within the 1st RAB while client type communication devices with identification numbers 3 and 77 should transmit within the 3rd RAB.

Also, the mapping rule defines how this determination of the random access block to be used is performed. Also here, the mapping rule may be pre-specified or dynamically set by the access point type communication device 20, especially by the mapping determining unit 23 and the communication unit 21.

For example, we define a permanent mapping function which is unique, predefined and depends on the parameters mentioned above. When a client type communication device receives the mapping allocation message with the RA parameters mentioned above it can derive the permanent mapping function from this set of parameters. A second mapping function is a temporary mapping function which can be defined as a change that is to be applied on the permanent function in the current RA frame.

For example, the permanent mapping function can define that the RAB number equals to an identification number of a client modulo a number of RABs. The temporary mapping function can define that all the client type communication devices should add a constant value to their identification number and then apply the permanent mapping function. This can assist with gradually changing the allocated resource per client over time. Denoting this value as $p$, it can be easily understood that the clients 1 and 75 should transmit within p-th RAB while client 3 and 77 should transmit within p+2-th RAB.

When receiving a random access communication from a client type communication device 10, the access point type communication device 20 is then directly able to determine, on the one hand, if the client type communication device 10 is in an associated mode with regard to the access point type communication device 20 or in a non-associated mode with regard to the access point type communication device 20, and on the other hand, if the client type communication device 10 is in the associated mode, determine the identity of the client type communication device 10.

The total number of the associated client type communication devices that can transmit with no collision within the single RA frame is defined by the number of the orthogonal sequences and the number of RABs dedicated for associated client type communication devices. For example, if 74 out of 78 RABs are dedicated to the associated client type communication devices and the number of the orthogonal sequences within each RAB is 7 the total number of 518 associated clients can successfully be detected with no collision within the single RA frame.

In Fig. 5, an exemplary set of communication resources, when using the above-described frequency diversity, is shown.

On the left side, two random access blocks 50, 51 are shown. The random access block 50 consists of three frequency-contiguous frequency sections 50a, 50b, 50c. The random access block 51 consists of three frequency-contiguous frequency sections 51a, 51b, 51c.

On the right side, that same situation after applying frequency diversity is shown. Now the random access blocks 50, 51 are spread over a large portion of the available spectrum. This solution is beneficial, since frequency dependent noise is divided upon the different random access blocks and not concentrated in a single random access block.

In Fig. 6, an exemplary set of communication resources, when using the above-described mapping randomization, is shown.

On the left side, a mapping of a frame N is shown. Here random access blocks 60 and 62 are used for already allocated client type communication devices and a random access block 61 is used for not yet allocated client type communication devices. Since frequency dependent noise can negatively affect the respective random access blocks 60, 61 and 62, in a further frame N + 1, the frequency location of the frames is shifted.

On the right side, a mapping of a frame N + 1 is shown. Here it can be clearly seen that now random access blocks 71 and 72 are used for already allocated client type communication devices and random access block 70 is used for not yet allocated client type communication devices. The random access blocks 60, 62 and the random access blocks 71, 72 do not overlap. Also the random access blocks 61 and 70 do not overlap.

Also by this measure, frequency dependent noise is divided upon the different random access blocks. The impact of such noise on specific client type communication devices is mitigated.

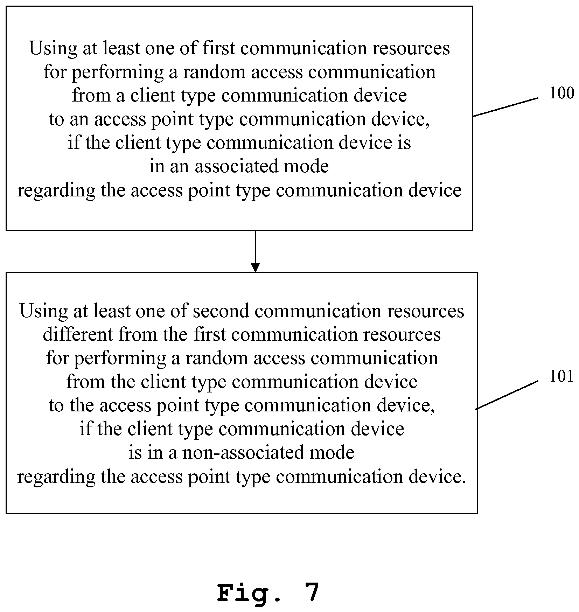

In Fig. 7 an embodiment of a communication method is shown. Here, the transmission side is described. In a first step 100, at least one of first communication resources is used for performing a random access communication from a client type communication device to an access point type communication device, if the client type communication device is in an associated mode regarding the access point type communication device. In a second step 101 which does not necessarily have to happen after the first step 100, at least one of a second communication resources different from the first communication resources is used for performing a random access communication from the client type communication device to the access point type communication device, if the client type communication device is in a non-associated mode regarding the access point type communication device.

In Fig. 8, an embodiment of a further communication method is shown. Here, the receiving side is described. In a first step 200, an access point type communication device receives from at least one client type communication device, a random access communication using at least one of first communication resources or one of second communication resources different from the first communication resources. In a second step 201, it is determined that the client type communication device is in an associated mode regarding the access point type communication device, if the random access communication uses the at least one first communication resources. In a third step 202, which does not necessarily have to occur after the second step 201, it is determined that the client type communication device is in a non-associated mode regarding the access point type communication device, if the random access communication uses at least one of second communication resources.

Finally, in Fig. 9, benefits of embodiments of the present invention are shown. Here, the total time duration for completing the random access mechanism for all contending associated and non-associated client type devices is shown on the y axis, while the number of contending client type communication devices is shown on the x-axis. Especially, in this case, 512 client type communication devices are associated with the AP device. It can clearly be seen, that the proposed mechanism according to the present invention, shown by a solid line, has a significantly shorter random access duration for any number of client type communications to be associated, than the previously used random access scheme shown by a dashed line.

By use of embodiments of the invention, it is possible to effectively enlarge and adjust the number of supported client type communication devices to the number of associated client type communication devices. Moreover, it is possible to increase the system efficiency. Especially, by choosing suitable random access parameters, such as given by the mapping rule and/or the communication resource determining message, the efficiency can be significantly improved.

Therefore, an improved random access performance is achieved. This can furthermore be increased by using the above-mentioned described frequency diversity and mapping randomization.

The invention is not limited to the communication schemes listed above. An application in any random access based communication scheme is possible. The characteristics of the exemplary embodiments can be used in any advantageous combination.

The invention has been described in conjunction with various embodiments herein. However, other variations to the disclosed embodiments can be understood and effected by those skilled in the art in practicing the claimed invention, from a study of the drawings, the disclosure and the appended claims. In the claims, the word "comprising " does not exclude other elements or steps and the indefinite article "a" or "an" does not exclude a plurality. A single processor or other unit may fulfill the functions of several items recited in the claims. The mere fact that certain measures are recited in usually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the internet or other wired or wireless communication systems.

**Claims**

1. Client type communication device (10) for communicating with an access point type communication device (20), the client type communication device (10) comprising a communication unit (11) adapted to

   - use at least one of first communication resources (31, 32, 33, 35, 36, 37) for performing a random access communication to the access point type communication device (20), if the client type communication device (10) is in an associated mode regarding the access point type communication device (20), and
   - use at least one of second communication resources (34) different from the first communication resources (31, 32, 33, 35, 36, 37) for performing a random access communication to the access point type communication device (20), if the client type communication device (10) is in a non-associated mode regarding the access point type communication device (20), and the first and second communication resources, each are random access blocks comprising a plurality of frequency subcarriers wherein between at least some of the frequency subcarriers further frequency subcarriers are existent which do not belong to the respective random access block.

2. Client type communication device (10) according to claim 1,
wherein each of said random access blocks therefore comprising at least two non-contiguous frequency sections.

3. Client type communication device (10) according to claim 1 or 2,
wherein the client type communication device (10) comprises a communication resources receiving unit (12), adapted to receive from the access point type communication device (20) a communication resources setting message, which defines the first communication resources (31, 32, 33, 35, 36, 37) and/or the second communication resources (34),
wherein the communication unit (11) is adapted to

- use at least one of the first communication resources (31, 32, 33, 35, 36, 37) defined by the communication resources setting message for performing the random access communication to the access point type communication device (20), if the client type communication device (10) is in the associated mode regarding the access point type communication device (20), and
- use at least one of the second communication resources (34) defined by the communication resources setting message for performing the random access communication to the access point type communication device (20), if the client type communication device (10) is in the non-associated mode regarding the access point type communication device (20).

4. Client type communication device (10) according to any of the claims 1 to 3,
wherein the client type communication device (10) comprises a mapping unit (14), adapted to, if the client type communication device (10) is in an associated mode regarding the access point type communication device (20),

- determine at least a part of the random access communication to the access point type communication device (20), based on the the identification number of the client type communication device (10), according to a mapping rule, and
- select the at least one of the first communication resources (31, 32, 33, 35, 36, 37) used for performing the random access communication to the access point type communication device (20), based on the identification number, according to the mapping rule.

5. Client type communication device (10) according to claim 4,
wherein the communication unit (11) is adapted to, if the client type communication device (10) is in an associated mode regarding the access point type communication device (20),

- receive from the access point type communication device (20), the identification number allocation message, allocating an identification number to the client type communication device (10), and/or
- a mapping rule allocation message, defining the mapping rule.

6. Client type communication device (10) according to any of the claims 1 to 5,
wherein the communication unit (11) is adapted to transmit the random access communication to the access point type communication device (20), so that the random access communication comprises only information identifying the client type communication device (10), and/or announcing a resource request of the Client type communication device (10).

7. Access point type communication device (20), for communicating with at least one client type communication device (10), the access point type communication device (20) comprising a communication unit (21) and a determining unit,
wherein the communication unit (21) is adapted to receive, from the at least one client type communication device (10), a random access communication using at least one of first communication resources (31, 32, 33, 35, 36, 37) or one of second communication resources (34) different from the first communication resources (31, 32, 33, 35, 36, 37), and
wherein the determining unit is adapted to determine that the client type communication device (10)

- is in an associated mode regarding the access point type communication device (20), if the random access communication uses the at least one of first communication resources (31, 32, 33, 35, 36, 37), and
- is in a non-associated mode regarding the access point type communication device (20), if the random access communication uses the at least one of second communication resources (34), and
the first and second communication resources, each are random access blocks comprising a plurality of frequency subcarriers wherein between at least some of the frequency subcarriers further frequency subcarriers are existent which do not belong to the respective random access block.

8. Access point type communication device (20) according to claim 7,
wherein each of said random access blocks therefore comprising at least two non-contiguous frequency sections.

9. Access point type communication device (20) according to claim 7 or 8,
wherein the access point type communication device (20) comprises a communication resources determining unit, adapted to determine the first communication resources (31, 32, 33, 35, 36, 37) and the second communication resources (34), based upon

- a number of client type communication device (10)s associated to the access point type communication device (20), and/or
- a frequency of receiving random access communications from client type communication devices (10) not associated to the access point type communication device (20), and/or
- a number of detected random access communication collisions, and
wherein the communication unit (21) is adapted to transmit, to the client type communication device (10), a communication resources setting message, which defines the first communication resources (31, 32, 33, 35, 36, 37) and/or the second communication resources (34).

10. Access point type communication device (20) according to claim 9, wherein the communication unit (21) is adapted to transmit the communication resources setting message as a broadcast message.

11. Access point type communication device (20) according to any of the claims 7 to 10,
wherein the access point type communication device (20) comprises an identification number allocation unit (24), adapted to allocate an identification number to each client type communication device (10) associated to the access point type communication device (20), and
wherein the communication unit (21) is adapted to transmit an identification number allocation message to each client type communication device (10) associated to the access point type communication device (20), informing the client type communication device (10) of its identification number.

12. Access point type communication device (20) according to claim 11,

wherein the access point type communication device (20) comprises a mapping rule determination unit (23), adapted to determine a mapping rule, which defines, how a client type communication device (10) associated to the access point type communication device (20) has to determine

- from a first part of the identification number, at least a part of the random access communication to the access point type communication device (20), and
- from a second part of the identification number, the at least one of first communication resources (31, 32, 33, 35, 36, 37) to be used for performing the random access communication from the client type communication device (10) to the access point type communication device (20), and
wherein the communication unit (21) is adapted to transmit a mapping rule allocation message to each client type communication device (10) associated to the access point type communication device (20), informing each of the Client type communication devices (10) of the mapping rule.

13. Access point type communication device (20) according to claim 12,
wherein the mapping rule determination unit (23) is adapted to alter the mapping rule at regular or irregular intervals, and
wherein the communication unit (21) is adapted to transmit a new mapping rule allocation message to each client type communication device (10) associated to the access point type communication device (20), informing each of the client type communication devices (10) of the altered mapping rule, each time the mapping rule determination unit (23) alters the mapping rule.

14. Access point type communication device (20) according to any of the claims 7 to 13,
wherein each of said random access blocks therefore comprising at least two specific non-contiguous frequency sections,
wherein the access point type communication device (20) comprises a channel state determining unit (27), adapted to

- determine channel properties on the at least two specific non-contiguous frequency sections from the random access communication received by the communication unit (21), and
- determine a transmission channel state from the channel properties on the at least two specific non-contiguous frequency sections, and
wherein the communication unit (21) is adapted to allocate resources for an upload and/or download payload data transmission to the client type communication device (10), based upon the transmission channel state determined by the channel state determining unit.

15. Communication system (1) comprising one access point type communication device (20) according to any of the claims 7 to 14 and at least one client type communication device (10) according to any of the claims 1 to 6.

16. Communication method for communicating by a client type communication device (10) with an access point type communication device (20), comprising

- using (100) at least one of first communication resources (31, 32, 33, 35, 36, 37) for performing a random access communication from the client type communication device (10) to the access point type communication device (20), if the client type communication device (10) is in an associated mode regarding the access point type communication device (20), and
- using (101) at least one of second communication resources (34) different from the first communication resources (31, 32, 33, 35, 36, 37) for performing a random access communication from the client type communication device (10) to the access point type communication device (20), if the client type communication device (10) is in a non-associated mode regarding the access point type communication device (20), and the first and second communication resources, each are random access blocks comprising a plurality of frequency subcarriers wherein between at least some of the frequency subcarriers further frequency subcarriers are existent which do not belong to the respective random access block.

17. Communication method for communicating by an access point type communication device (20) with at least one client type communication device (10), comprising

- receiving (200), by the access point type communication device (20), from the at least one client type communication device (10), a random access communication using at least one of first communication resources (31, 32, 33, 35, 36, 37) or one of second communication resources (34) different from the first communication resources (31, 32, 33, 35, 36, 37),
- determining (201) that the client type communication device (10) is in an associated mode regarding the access point type communication device (20), if the random access communication uses the at least one of first communication resources (31, 32, 33, 35, 36, 37), and

- determining (202) that the client type communication device (10) is in a non-associated mode regarding the access point type communication device (20), if the random access communication uses the at least one of second communication resources (34), and the first and second communication resources, each are random access blocks comprising a plurality of frequency subcarriers wherein between at least some of the frequency subcarriers further frequency subcarriers are existent which do not belong to the respective random access block.

18. Computer program comprising program code for performing, when executed on a processor, the method according to claim 16 or 17.

**Patentansprüche**

1. Client-Typ-Kommunikationsvorrichtung (10) zum Kommunizieren mit einer Zugangspunkt-Typ-Kommunikationsvorrichtung (20), wobei die Client-Typ-Kommunikationsvorrichtung (10) eine Kommunikationseinheit (11) umfasst, die zu Folgendem ausgelegt ist:

- Verwenden wenigstens einer von ersten Kommunikationsressourcen (31, 32, 33, 35, 36, 37) zum Durchführen einer Direktzugriffskommunikation zu der Zugangspunkt-Typ-Kommunikationsvorrichtung (20), falls sich die Client-Typ-Kommunikationsvorrichtung (10) in einem assoziierten Modus bezüglich der Zugangspunkt-Typ-Kommunikationsvorrichtung (20) befindet, und
- Verwenden wenigstens einer zweiten Kommunikationsressource (34), die von den ersten Kommunikationsressourcen (31, 32, 33, 35, 36, 37) verschieden ist, zum Durchführen einer Direktzugriffskommunikation zu der Zugangspunkt-Typ-Kommunikationsvorrichtung (20), falls sich die Client-Typ-Kommunikationsvorrichtung (10) in einem nichtassoziierten Modus bezüglich der Zugangspunkt-Typ-Kommunikationsvorrichtung (20) befindet, und wobei die ersten und zweiten Kommunikationsressourcen jeweils Direktzugriffsblöcke sind, die mehrere Frequenzsubträger umfassen, wobei zwischen wenigstens manchen der Frequenzsubträger weitere Frequenzsubträger vorhanden sind, die nicht zu dem jeweiligen Direktzugriffsblock gehören.

2. Client-Typ-Kommunikationsvorrichtung (10) nach Anspruch 1, wobei jeder der Direktzugriffsblöcke daher wenigstens zwei nichtzusammenhängende Frequenzabschnitte umfasst.

3. Client-Typ-Kommunikationsvorrichtung (10) nach Anspruch 1 oder 2,
wobei die Client-Typ-Kommunikationsvorrichtung (10) eine Kommunikationsressourcenempfangseinheit (12) umfasst, die zum Empfangen, von der Zugangspunkt-Typ-Kommunikationsvorrichtung (20), einer Kommunikationsressourceneinstellungsnachricht ausgelegt ist, die die ersten Kommunikationsressourcen (31, 32, 33, 35, 36, 37) und/oder die zweiten Kommunikationsressourcen (34) definiert,
wobei die Kommunikationseinheit (11) zu Folgendem ausgelegt ist:

- Verwenden wenigstens einer der ersten Kommunikationsressourcen (31, 32, 33, 35, 36, 37), die durch die Kommunikationsressourceneinstellungsnachricht definiert sind, zum Durchführen der Direktzugriffskommunikation zu der Zugangspunkt-Typ-Kommunikationsvorrichtung (20), falls sich die Client-Typ-Kommunikationsvorrichtung (10) in dem assoziierten Modus bezüglich der Zugangspunkt-Typ-Kommunikationsvorrichtung (20) befindet, und
- Verwenden wenigstens einer der zweiten Kommunikationsressourcen (34), die durch die Kommunikationsressourceneinstellungsnachricht definiert sind, zum Durchführen der Direktzugriffskommunikation zu der Zugangspunkt-Typ-Kommunikationsvorrichtung (20), falls sich die Client-Typ-Kommunikationsvorrichtung (10) in dem nichtassoziierten Modus bezüglich der Zugangspunkt-Typ-Kommunikationsvorrichtung (20) befindet.

4. Client-Typ-Kommunikationsvorrichtung (10) nach einem der Ansprüche 1 bis 3, wobei die Client-Typ-Kommunikationsvorrichtung (10) eine Zuordnungseinheit (14) umfasst, die, falls sich die Client-Typ-Kommunikationsvorrichtung (10) in einem assoziierten Modus bezüglich der Zugangspunkt-Typ-Kommunikationsvorrichtung (20) befindet, zu Folgendem ausgelegt ist:

- Bestimmen wenigstens eines Teils der Direktzugriffskommunikation auf die Zugangspunkt-Typ-Kommunikationsvorrichtung (20) basierend auf der Identifikationszahl der Client-Typ-Kommunikationsvorrichtung (10) gemäß einer Zuordnungsregel, und
- Auswählen wenigstens einer der ersten Kommunikationsressourcen (31, 32, 33, 35, 36, 37), die zum Durchführen der Direktzugriffskommunikation zu der Zugangspunkt-Typ-Kommunikationsvorrichtung (20) verwendet werden, basierend auf der Identifikationszahl gemäß einer Zuordnungsregel.

5. Client-Typ-Kommunikationsvorrichtung (10) nach Anspruch 4,
wobei die Kommunikationseinheit (11), falls sich die Client-Typ-Kommunikationsvorrichtung (10) in einem assoziierten Modus bezüglich der Zugangspunkt-Typ-Kommunikationsvorrichtung (20) befindet, zu Folgendem ausgelegt ist:

- Empfangen, von der Zugangspunkt-Typ-Kommunikationsvorrichtung (20), der Identifikationszahlzuweisungsnachricht, die der Client-Typ-Kommunikationsvorrichtung (10) eine Identifikationszahl zuweist, und/oder
- einer Zuordnungsregelzuweisungsnachricht, die die Zuordnungsregel definiert.

6. Client-Typ-Kommunikationsvorrichtung (10) nach einem der Ansprüche 1 bis 5, wobei die Kommunikationseinheit (11) zum Übertragen der Direktzugriffskommunikation an die Zugangspunkt-Typ-Kommunikationsvorrichtung (20) ausgelegt ist, so dass die Direktzugriffskommunikation nur Informationen umfasst, die die Client-Typ-Kommunikationsvorrichtung (10) identifizieren und/oder eine Ressourcenanforderung von der Client-Typ-Kommunikationsvorrichtung (10) ankündigen.

7. Zugangspunkt-Typ-Kommunikationsvorrichtung (20) zum Kommunizieren mit wenigstens einer Client-Typ-Kommunikationsvorrichtung (10), wobei die Zugangspunkt-Typ-Kommunikationsvorrichtung (20) eine Kommunikationseinheit (21) und eine Bestimmungseinheit umfasst,
wobei die Kommunikationseinheit (21) zum Empfangen, von der wenigstens einen Client-Typ-Kommunikationsvorrichtung (10), einer Direktzugriffskommunikation unter Verwendung wenigstens einer von ersten Kommunikationsressourcen (31, 32, 33, 35, 36, 37) oder einer von zweiten Kommunikationsressourcen (34), die von den ersten Kommunikationsressourcen (31, 32, 33, 35, 36, 37) verschieden sind, ausgelegt ist, und
wobei die Bestimmungseinheit zum Bestimmen ausgelegt ist, dass die Client-Typ-Kommunikationsvorrichtung (10)

- sich in einem assoziierten Modus bezüglich der Zugangspunkt-Typ-Kommunikationsvorrichtung (20) befindet, falls die Direktzugriffskommunikation die wenigstens eine der ersten Kommunikationsressourcen (31, 32, 33, 35, 36, 37) verwendet, und
- sich in einem nichtassoziierten Modus bezüglich der Zugangspunkt-Typ-Kommunikationsvorrichtung (20) befindet, falls die Direktzugriffskommunikation die wenigstens eine der zweiten Kommunikationsressourcen (34) verwendet, und wobei die ersten und zweiten Kommunikationsressourcen jeweils Direktzugriffsblöcke sind, die mehrere Frequenzsubträger umfassen, wobei zwischen wenigstens manchen der Frequenzsubträger weitere Frequenzsubträger vorhanden sind, die nicht zu dem jeweiligen Direktzugriffsblock gehören.

8. Zugangspunkt-Typ-Kommunikationsvorrichtung (20) nach Anspruch 7, wobei jeder der Direktzugriffsblöcke daher wenigstens zwei nichtzusammenhängende Frequenzabschnitte umfasst.

9. Zugangspunkt-Typ-Kommunikationsvorrichtung (20) nach Anspruch 7 oder 8, wobei die Zugangspunkt-Typ-Kommunikationsvorrichtung (20) eine Kommunikationsressourcenbestimmungseinheit umfasst, die zum Bestimmen der ersten Kommunikationsressourcen (31, 32, 33, 35, 36, 37) und der zweiten Kommunikationsressourcen (34) basierend auf Folgendem ausgelegt ist:

     - einer Zahl von Client-Typ-Kommunikationsvorrichtungen (10), die mit der Zugangspunkt-Typ-Kommunikationsvorrichtung (20) assoziiert sind, und/oder
     - einer Häufigkeit des Empfangens von Direktzugriffskommunikationen von Client-Typ-Kommunikationsvorrichtungen (10), die nicht mit der Zugangspunkt-Typ-Kommunikationsvorrichtung (20) assoziiert sind, und/oder
     - einer Zahl von detektierten Direktzugriffskommunikationskollisionen, und
     wobei die Kommunikationseinheit (21) zum Übertragen, an die Client-Typ-Kommunikationsvorrichtung (10), einer Kommunikationsressourceneinstellungsnachricht ausgelegt ist, die die ersten Kommunikationsressourcen (31, 32, 33, 35, 36, 37) und/oder die zweiten Kommunikationsressourcen (34) definiert.

10. Zugangspunkt-Typ-Kommunikationsvorrichtung (20) nach Anspruch 9, wobei die Kommunikationseinheit (21) zum Übertragen der Kommunikationsressourceneinstellungsnachricht als eine "Broadcast"-Nachricht ausgelegt ist.

11. Zugangspunkt-Typ-Kommunikationsvorrichtung (20) nach einem der Ansprüche 7 bis 10, wobei die Zugangspunkt-Typ-Kommunikationsvorrichtung (20) eine Identifikationszahlzuweisungseinheit (24) umfasst, die zum Zuweisen einer Identifikationszahl zu jeder Client-Typ-Kommunikationsvorrichtung (10) ausgelegt ist, die mit der Zugangspunkt-Typ-Kommunikationsvorrichtung (20) assoziiert ist, und wobei die Kommunikationseinheit (21) zum Übertragen einer Identifikationszahlzuweisungsnachricht an jede Client-Typ-Kommunikationsvorrichtung (10) ausgelegt ist, die mit der Zugangspunkt-Typ-Kommunikationsvorrichtung (20) assoziiert ist, wobei die Client-Typ-Kommunikationsvorrichtung (10) über ihre Identifikationszahl informiert wird.

12. Zugangspunkt-Typ-Kommunikationsvorrichtung (20) nach Anspruch 11, wobei die Zugangspunkt-Typ-Kommunikationsvorrichtung (20) eine Zuordnungsregelbestimmungseinheit (23) umfasst, die zum Bestimmen einer Zuordnungsregel ausgelegt ist, die definiert, wie eine Client-Typ-Kommunikationsvorrichtung (10), die mit der Zugangspunkt-Typ-Kommunikationsvorrichtung (20) assoziiert ist, Folgendes bestimmen soll:

     - aus einem ersten Teil der Identifikationszahl, wenigstens einen Teil der Direktzugriffskommunikation mit der Zugangspunkt-Typ-Kommunikationsvorrichtung (20), und
     - aus einem zweiten Teil der Identifikationszahl, die wenigstens eine von ersten Kommunikationsressourcen (31, 32, 33, 35, 36, 37), die zum Durchführen der Direktzugriffskommunikation von der Client-Typ-Kommunikationsvorrichtung (10) zu der Zugangspunkt-Typ-Kommunikationsvorrichtung (20) zu verwenden ist, und
     wobei die Kommunikationseinheit (21) zum Übertragen einer Zuordnungsregelzuweisungsnachricht an jede Client-Typ-Kommunikationsvorrichtung (10) ausgelegt ist, die mit der Zugangspunkt-Typ-Kommunikationsvorrichtung (20) assoziiert ist, wobei jede der Client-Typ-Kommunikationsvorrichtungen (10) über die Zuordnungsregel informiert wird.

13. Zugangspunkt-Typ-Kommunikationsvorrichtung (20) nach Anspruch 12, wobei die Zuordnungsregelbestimmungseinheit (23) zum Verändern der Zuordnungsregel in regelmäßigen oder unregelmäßigen Intervallen ausgelegt ist, und wobei die Kommunikationseinheit (21) zum Übertragen einer neuen Zuordnungsregelzuweisungsnachricht an jede Client-Typ-Kommunikationsvorrichtung (10) ausgelegt ist, die mit der Zugangspunkt-Typ-Kommunikationsvorrichtung (20) assoziiert ist, wobei jede der Client-Typ-Kommunikationsvorrichtungen (10) über die veränderte Zuordnungsregel informiert wird, jedes Mal, wenn die Zuordnungsregelbestimmungseinheit (23) die Zuordnungsregel verändert.

14. Zugangspunkt-Typ-Kommunikationsvorrichtung (20) nach einem der Ansprüche 7 bis 13, wobei jeder der Direktzugriffsblöcke daher wenigstens zwei spezifische nichtzusammenhängende Frequenzabschnitte umfasst, wobei die Zugangspunkt-Typ-Kommunikationsvorrichtung (20) eine Kanalzustandsbestimmungseinheit (27) umfasst, die zu Folgendem ausgelegt ist:

- Bestimmen von Kanaleigenschaften über die wenigstens zwei spezifischen nichtzusammenhängenden Frequenzabschnitte aus der Direktzugriffskommunikation, die durch die Kommunikationseinheit (21) empfangen wird, und
- Bestimmen eines Übertragungskanalzustands aus den Kanaleigenschaften der wenigstens zwei spezifischen nichtzusammenhängenden Frequenzabschnitte, und

wobei die Kommunikationseinheit (21) zum Zuweisen von Ressourcen für eine "Upload"- und/oder "Download"-Nutzdatenübertragung an die Client-Typ-Kommunikationsvorrichtung (10) basierend auf dem Übertragungskanalzustand ausgelegt ist, der durch die Kanalzustandsbestimmungseinheit bestimmt wird.

15. Kommunikationssystem (1), das eine Zugangspunkt-Typ-Kommunikationsvorrichtung (20) nach einem der Ansprüche 7 bis 14, und wenigstens eine Client-Typ-Kommunikationsvorrichtung (10) nach einem der Ansprüche 1 bis 6 umfasst.

16. Kommunikationsverfahren zum Kommunizieren durch eine Client-Typ-Kommunikationsvorrichtung (10) mit einer Zugangspunkt-Typ-Kommunikationsvorrichtung (20), welches Folgendes umfasst:

- Verwenden (100) wenigstens einer von ersten Kommunikationsressourcen (31, 32, 33, 35, 36, 37) zum Durchführen einer Direktzugriffskommunikation von der Client-Typ-Kommunikationsvorrichtung (10) zu der Zugangspunkt-Typ-Kommunikationsvorrichtung (20), falls sich die Client-Typ-Kommunikationsvorrichtung (10) in einem assoziierten Modus bezüglich der Zugangspunkt-Typ-Kommunikationsvorrichtung (20) befindet, und
- Verwenden (101) wenigstens einer von zweiten Kommunikationsressourcen (34), die von den ersten Kommunikationsressourcen (31, 32, 33, 35, 36, 37) verschieden sind, zum Durchführen einer Direktzugriffskommunikation von der Client-Typ-Kommunikationsvorrichtung (10) zu der Zugangspunkt-Typ-Kommunikationsvorrichtung (20), falls sich die Client-Typ-Kommunikationsvorrichtung (10) in einem nichtassoziierten Modus bezüglich der Zugangspunkt-Typ-Kommunikationsvorrichtung (20) befindet, und wobei die ersten und zweiten Kommunikationsressourcen jeweils Direktzugriffsblöcke sind, die mehrere Frequenzsubträger umfassen, wobei zwischen wenigstens manchen der Frequenzsubträger weitere Frequenzsubträger vorhanden sind, die nicht zu dem jeweiligen Direktzugriffsblock gehören.

17. Kommunikationsverfahren zum Kommunizieren durch eine Zugangspunkt-Typ-Kommunikationsvorrichtung (20) mit wenigstens einer Client-Typ-Kommunikationsvorrichtung (10), welches Folgendes umfasst:

Empfangen (200), durch die Zugangspunkt-Typ-Kommunikationsvorrichtung (20) von der wenigstens einen Client-Typ-Kommunikationsvorrichtung (10), einer Direktzugriffskommunikation unter Verwendung wenigstens einer von ersten Kommunikationsressourcen (31, 32, 33, 35, 36, 37) oder einer von zweiten Kommunikationsressourcen (34), die von den ersten Kommunikationsressourcen (31, 32, 33, 35, 36, 37) verschieden sind,

- Bestimmen (201), dass sich die Client-Typ-Kommunikationsvorrichtung (10) in einem assoziierten Modus bezüglich der Zugangspunkt-Typ-Kommunikationsvorrichtung (20) befindet, falls die Direktzugriffskommunikation die wenigstens eine der ersten Kommunikationsressourcen (31, 32, 33, 35, 36, 37) verwendet, und
- Bestimmen (202), dass sich die Client-Typ-Kommunikationsvorrichtung (10) in einem nichtassoziierten Modus bezüglich der Zugangspunkt-Typ-Kommunikationsvorrichtung (20) befindet, falls die Direktzugriffskommunikation die wenigstens eine der zweiten Kommunikationsressourcen (34) verwendet, und wobei die ersten und zweiten Kommunikationsressourcen jeweils Direktzugriffsblöcke sind, die mehrere Frequenzsubträger umfassen, wobei zwischen wenigstens manchen der Frequenzsubträger weitere Frequenzsubträger vorhanden sind, die nicht zu dem jeweiligen Direktzugriffsblock gehören.

18. Computerprogramm, das Programmcode zum Durchführen, bei Ausführung auf einem Prozessor, des Verfahrens nach Anspruch 16 oder 17 umfasst.

**Revendications**

1. Dispositif de communication de type client (10) pour communiquer avec un dispositif de communication de type point d'accès (20), le dispositif de communication de type client (10) comprenant une unité de communication (11) conçue pour :

utiliser au moins une de premières ressources de communication (31, 32, 33, 35, 36, 37) pour réaliser une communication à accès aléatoire avec le dispositif de communication de type point d'accès (20), si le dispositif de communication de type client (10) est dans un mode associé à l'égard du dispositif de communication de type point d'accès (20), et utiliser au moins une de secondes ressources de communication (34) différentes des premières ressources de communication (31, 32, 33, 35, 36, 37) pour réaliser une communication à accès aléatoire avec le dispositif de communication de type point d'accès (20), si le dispositif de communication de type client (10) est dans un mode non associé à l'égard du dispositif de communication de type point d'accès (20), et les premières et secondes ressources de communication étant chacune des blocs à accès aléatoire comprenant une pluralité de sous-porteuses en fréquence, et d'autres sous-porteuses en fréquence, qui n'appartiennent pas au bloc à accès aléatoire respectif, existant entre au moins certaines des sous-porteuses en fréquence.

**2.** Dispositif de communication de type client (10) selon la revendication 1,
dans lequel chacun desdits blocs à accès aléatoire comprend par conséquent au moins deux sections de fréquence non contiguës.

**3.** Dispositif de communication de type client (10) selon la revendication 1 ou 2,
le dispositif de communication de type client (10) comprenant une unité de réception de ressources de communication (12), conçue pour recevoir, en provenance du dispositif de communication de type point d'accès (20), un message de réglage de ressources de communication qui définit les premières ressources de communication (31, 32, 33, 35, 36, 37) et/ou les secondes ressources de communication (34),
l'unité de communication (11) étant conçue pour :
utiliser au moins une des premières ressources de communication (31, 32, 33, 35, 36, 37) définies par le message de réglage de ressources de communication pour réaliser la communication à accès aléatoire avec le dispositif de communication de type point d'accès (20), si le dispositif de communication de type client (10) est dans le mode associé à l'égard du dispositif de communication de type point d'accès (20), et utiliser au moins une des secondes ressources de communication (34) définies par le message de réglage de ressources de communication pour réaliser la communication à accès aléatoire avec le dispositif de communication de type point d'accès (20), si le dispositif de communication de type client (10) est dans le mode non associé à l'égard du dispositif de communication de type point d'accès (20).

**4.** Dispositif de communication de type client (10) selon l'une quelconque des revendications 1 à 3,
le dispositif de communication de type client (10) comprenant une unité de mise en concordance (14), conçue pour, si le dispositif de communication de type client (10) est dans un mode associé à l'égard du dispositif de communication de type point d'accès (20) :
déterminer au moins une partie de la communication à accès aléatoire avec le dispositif de communication de type point d'accès (20), sur la base du numéro d'identification du dispositif de communication de type client (10), selon une règle de concordance, et sélectionner l'au moins une des premières ressources de communication (31, 32, 33, 35, 36, 37) utilisée pour réaliser la communication à accès aléatoire avec le dispositif de communication de type point d'accès (20), sur la base du numéro d'identification, selon la règle de concordance.

**5.** Dispositif de communication de type client (10) selon la revendication 4,
dans lequel l'unité de communication (11) est conçue pour, si le dispositif de communication de type client (10) est dans un mode associé à l'égard du dispositif de communication de type point d'accès (20) :
recevoir, en provenance du dispositif de communication de type point d'accès (20), le message d'affectation de numéro d'identification, qui affecte un numéro d'identification au dispositif de communication de type client (10), et/ou un message d'affectation de règle de concordance, qui définit la règle de concordance.

**6.** Dispositif de communication de type client (10) selon l'une quelconque des revendications 1 à 5,
dans lequel l'unité de communication (11) est conçue pour transmettre la communication à accès aléatoire au dispositif de communication de type point d'accès (20), de sorte que la communication à accès aléatoire comprenne uniquement des informations identifiant le dispositif de communication de type client (10) et/ou annonçant une demande de ressource du dispositif de communication de type client (10).

**7.** Dispositif de communication de type point d'accès (20) pour communiquer avec au moins un dispositif de communication de type client (10), le dispositif de communication de type point d'accès (20) comprenant une unité de communication (21) et une unité de détermination,
l'unité de communication (21) étant conçue pour recevoir, en provenance de l'au moins un dispositif de communication de type client (10), une communication à accès aléatoire au moyen d'au moins une de première ressources de communication (31, 32, 33, 35, 36, 37) ou d'au moins une de secondes ressources de communication (34) différentes des premières ressources de communication (31, 32, 33, 35, 36, 37), et l'unité de détermination étant conçue pour déterminer que le dispositif de communication de type client (10) :

est dans un mode associé à l'égard du dispositif de communication de type point d'accès (20), si la communication à accès aléatoire utilise l'au moins une de premières ressources de communication (31, 32, 33, 35, 36, 37), et

est dans un mode non associé à l'égard du dispositif de communication de type point d'accès (20), si la communication à accès aléatoire utilise l'au moins une de secondes de communication (34), et

les premières et secondes ressources de communication étant chacune des blocs à accès aléatoire comprenant une pluralité de sous-porteuses en fréquence, et d'autres sous-porteuses en fréquence, qui n'appartiennent pas au bloc à accès aléatoire respectif, existant entre au moins certaines des sous-porteuses en fréquence.

**8.** Dispositif de communication de type point d'accès (20) selon la revendication 7, dans lequel chacun desdits blocs à accès aléatoire comprend par conséquent au moins deux sections de fréquence non contiguës.

**9.** Dispositif de communication de type point d'accès (20) selon la revendication 7 ou 8, le dispositif de communication de type point d'accès (20) comprenant une unité de détermination de ressources de communication, conçue pour déterminer les premières ressources de communication (31, 32, 33, 35, 36, 37) et les secondes ressources de communication (34) sur la base de :

un nombre de dispositifs de communication de type client (10) associés au dispositif de communication de type point d'accès (20), et/ou
une fréquence de réception de communications à accès aléatoire en provenance de dispositifs de communication de type client (10) non associés au dispositif de communication de type point d'accès (20), et/ou
un nombre de collisions détectées de communications à accès aléatoire, et

dans lequel l'unité de communication (21) est conçue pour transmettre, au dispositif de communication de type client (10), un message de réglage de ressources de communication qui définit les premières ressources de communication (31, 32, 33, 35, 36, 37) et/ou les secondes ressources de communication (34).

**10.** Dispositif de communication de type point d'accès (20) selon la revendication 9, dans lequel l'unité de communication (21) est conçue pour transmettre le message de réglage de ressources de communication comme un message de diffusion.

**11.** Dispositif de communication de type point d'accès (20) selon l'une quelconque des revendications 7 à 10,

le dispositif de communication de type point d'accès (20) comprenant une unité d'affectation de numéro d'identification (24), conçue pour affecter un numéro d'identification à chaque dispositif de communication de type client (10) associé au dispositif de communication de type point d'accès (20), et

dans lequel l'unité de communication (21) est conçue pour transmettre un message d'affectation de numéro d'identification à chaque dispositif de communication de type client (10) associé au dispositif de communication de type point d'accès (20), informant le dispositif de communication de type client (10) de son numéro d'identification.

**12.** Dispositif de communication de type point d'accès (20) selon la revendication 11,

le dispositif de communication de type point d'accès (20) comprenant une unité de détermination de règle de concordance (23), conçue pour déterminer une règle de concordance qui définit comment un dispositif de communication de type client (10) associé au dispositif de communication de type point d'accès (20) doit déterminer :

à partir d'une première partie du numéro d'identification, au moins une partie de la communication à accès aléatoire avec le dispositif de communication de type point d'accès (20), et
à partir d'une seconde partie du numéro d'identification, l'au moins une de premières ressources de communication (31, 32, 33, 35, 36, 37) à utiliser pour réaliser la communication à accès aléatoire du dispositif de communication de type client (10) au dispositif de communication de type point d'accès (20), et

dans lequel l'unité de communication (21) est conçue pour transmettre un message d'affectation de règle de concordance à chaque dispositif de communication de type client (10) associé au dispositif de communication de type point d'accès (20), informant chacun des dispositifs de communication de type client (10) de la règle de concordance.

**13.** Dispositif de communication de type point d'accès (20) selon la revendication 12,

dans lequel l'unité de détermination de règle de concordance (23) est conçue pour modifier la règle de concordance à intervalles réguliers ou irréguliers, et
dans lequel l'unité de communication (21) est conçue pour transmettre un nouveau message d'affectation de règle de concordance à chaque dispositif de communication de type client (10) associé au dispositif de communication de type point d'accès (20), informant chacun des dispositifs de communication de type client (10) de la règle de concordance modifiée, chaque fois que l'unité de détermination de règle de concordance (23) modifie la règle de concordance.

14. Dispositif de communication de type point d'accès (20) selon l'une quelconque des revendications 7 à 13,

dans lequel chacun desdits blocs à accès aléatoire comprend par conséquent au moins deux sections de fréquence non contiguës spécifiques,

le dispositif de communication de type point d'accès (20) comprenant une unité de détermination d'état de canal (27), conçue pour :

déterminer des propriétés de canal sur les au moins deux sections de fréquence non contiguës spécifiques à partir de la communication à accès aléatoire reçue par l'unité de communication (21), et

déterminer un état de canal de transmission à partir des propriétés de canal sur les au moins deux sections de fréquence non contiguës spécifiques, et

dans lequel l'unité de communication (21) est conçue pour affecter des ressources pour une transmission de données de charge utile de téléversement et/ou téléchargement au dispositif de communication de type client (10), sur la base de l'état de canal de transmission déterminé par l'unité de détermination d'état de canal.

15. Système de communication (1) comprenant un dispositif de communication de type point d'accès (20) selon l'une quelconque des revendications 7 à 14 et au moins un dispositif de communication de type client (10) selon l'une quelconque des revendications 1 à 6.

16. Procédé de communication pour la communication d'un dispositif de communication de type client (10) avec un dispositif de communication de type point d'accès (20), le procédé comprenant les étapes consistant à :

utiliser (100) au moins une de premières ressources de communication (31, 32, 33, 35, 36, 37) pour réaliser une communication à accès aléatoire du dispositif de communication de type client (10) au dispositif de communication de type point d'accès (20), si le dispositif de communication de type client (10) est dans un mode associé à l'égard du dispositif de communication de type point d'accès (20), et

utiliser (101) au moins une de secondes ressources de communication (34) différentes des premières ressources de communication (31, 32, 35, 36, 37) pour réaliser une communication à accès aléatoire du dispositif de communication de type client (10) au dispositif de communication de type point d'accès (20), si le dispositif de communication de type client (10) est dans un mode non associé à l'égard du dispositif de communication de type point d'accès (20), et les premières et secondes ressources de communication étant chacune des blocs à accès aléatoire comprenant une pluralité de sous-porteuses en fréquence, et d'autres sous-porteuses en fréquence, qui n'appartiennent pas au bloc à accès aléatoire respectif, existant entre au moins certaines des sous-porteuses en fréquence.

17. Procédé de communication pour la communication d'un dispositif de communication de type point d'accès (20) avec au moins un dispositif de communication de type client (10), le procédé comprenant les étapes consistant à :

recevoir (200), par le dispositif de communication de type point d'accès (20), en provenance de l'au moins un dispositif de communication de type client (10), une communication à accès aléatoire au moyen d'au moins une de première ressources de communication (31, 32, 33, 35, 36, 37) ou d'au moins une de secondes ressources de communication (34) différentes des premières ressources de communication (31, 32, 33, 35, 36, 37),

déterminer (201) que le dispositif de communication de type client (10) est dans un mode associé à l'égard du dispositif de communication de type point d'accès (20), si la communication à accès aléatoire utilise l'au moins une de premières ressources de communication (31, 32, 33, 35, 36, 37), et

déterminer (202) que le dispositif de communication de type client (10) est dans un mode non associé à l'égard du dispositif de communication de type point d'accès (20), si la communication à accès aléatoire utilise l'au moins une de secondes de communication (34), et

les premières et secondes ressources de communication étant chacune des blocs à accès aléatoire comprenant une pluralité de sous-porteuses en fréquence, et d'autres sous-porteuses en fréquence, qui n'appartiennent pas au bloc à accès aléatoire respectif, existant entre au moins certaines des sous-porteuses en fréquence.

18. Programme informatique comprenant un code de programme qui permet, lorsqu'il est exécuté sur un processeur, de réaliser le procédé selon la revendication 16 ou 17.

1

COM
RES
REC   12

13

11   COM   CTRL   MAP   14

10

22

COM   MAP
COM   RES   DET
21   DET

23

CHA   ID   CTRL   DET   26
STA   ALL
DET

27   24   25   20

# Fig. 1

RA Blocks for
Existing STAs

RA Blocks for
New STAs

RA Blocks for
Existing STAs

31
32
33
34
35
36
37

Fig. 2

30

Symbol #1                                    Symbol #M

Frequency

| $S_{00}$ | ----------------------------------------------------- | $S_{0,M-1}$ |
| | ----------------------------------------------------- | |
| $S_{K-1,0}$ | ----------------------------------------------------- | $S_{K-1,M-1}$ |

# Fig. 3

40

41          42

Identification number

Transmitted sequence                    RAB number

# Fig. 4

50

50a

50b

50c

51a

51b

51c

51

Logical
RAB
Mapping

50a
51a

50b

51b

50c
51c

Diversity of
RABs in
Frequency

# Fig. 5

60 → RAB₁ {

61 → RABs for
New
STAs {

62 → RABₙ/ₖ {

RAB
Mapping
in Frame
N

RABs for
New
STAs {

RAB₁ {

RABₙ/ₖ {

← 70

← 71

← 72

RAB
Mapping
in Frame
N+1

# Fig. 6

Using at least one of first communication resources
for performing a random access communication
from a client type communication device
to an access point type communication device,
if the client type communication device is
in an associated mode
regarding the access point type communication device

100

Using at least one of second communication resources
different from the first communication resources
for performing a random access communication
from the client type communication device
to the access point type communication device,
if the client type communication device
is in a non-associated mode
regarding the access point type communication device.

101

Fig. 7

```
┌─────────────────────────────────────────────────┐
│     Receiving, by an access point type communication │
│                   device,                           │
│   from at least one client type communication device, │  ── 200
│           a random access communication            │
│   using at least one of first communication resources │
│        or one of second communication resources    │
│     different from the first communication resources │
└─────────────────────────────────────────────────┘
                        │
                        ▼
┌─────────────────────────────────────────────────┐
│   Determining that the client type communication device │
│              is in an associated mode              │  ── 201
│   regarding the access point type communication device, │
│         if the random access communication uses    │
│      the at least one of first communication resources │
└─────────────────────────────────────────────────┘
                        │
                        ▼
┌─────────────────────────────────────────────────┐
│   Determining that the client type communication device │
│            is in a non-associated mode             │  ── 202
│   regarding the access point type communication device, │
│         if the random access communication uses    │
│     the at least one of second communication resources │
└─────────────────────────────────────────────────┘
```

**Fig. 8**

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006020520 A2